# EUROPEAN PATENT SPECIFICATION

(11) **EP 3 914 551 B1**
(45) Date of publication and mention of the grant of the patent: **28.10.2026**
(21) Application number: 20745680.7
(22) Date of filing: 17.01.2020
(51) Int. Cl.: B66F 7/04, B66F 1/06, B66F 3/46, B66F 7/12, B66F 7/28, B66F 7/20, E04H 6/26

(54) **THREE-LEVEL VEHICLE LIFT**
FAHRZEUGLIFT MIT DREI EBENEN
PONT ÉLÉVATEUR POUR VÉHICULES À TROIS NIVEAUX

(30) Priority: 22.01.2019 US 201962795353 P
(43) Date of publication of application: 01.12.2021
(73) Proprietor: BendPak, Inc., Agoura Hills, CA 91301 (US)
(72) Inventor: KRITZER, Jeffrey S., Moorpark, CA 93021 (US)
(74) Representative: Glück Kritzenberger Patentanwälte PartGmbB
(86) International application number: PCT/US2020/014129
(87) International publication number: WO 2020/154200

(56) References cited:
- WO-A1-2017/182811
- WO-A1-94/01642
- CH-A5- 647 034
- CN-A- 108 756 392
- GB-A- 2 549 533
- US-B2- 7 597 521
- US-B2- 8 075 237
- US-B2- 9 266 674
- US-B2- 9 751 737

## Description

### BACKGROUND

Three-level vehicle and automobile lifts are widely available and known for use in service garages as well as for storage of automobiles. Available storage lifts enable one or multiple vehicles to be lifted vertically and positioned in a stacked arrangement such that subsequent vehicles can be stored beneath the lifted vehicles. Such known lifts and their associated components are complex, expensive, cumbersome, and difficult to ship and to install.

CH 647 034 A5 discloses a parking device for motor vehicles with two vertically arranged platforms for the vehicles, with a lifting and tilting device for the platforms in order to bring them from a lowered position, in which the upper platform is driveable, to a raised position, in which the lower platform is driveable.

WO 94/01642 A1 discloses a vehicle parking installation comprising a pair of vertical columns, a plurality of platforms, means for locking the platforms, a member for driving the platforms and a control unit for the driving member and the locking means.

CN 108 756 392 A discloses a column-type multi-level parking device, comprising a control system and a parking platform. The parking column is able to rotate and comprises a column fixed to the ground and a plurality of connecting portions fixed to the column, a column sleeve which is set on the column and connected to the connecting portion by a bearing, a support frame which is arranged on the column sleeve.

GB 2 549 533 A discloses an apparatus for storing bed frames including a mounting device and at least one bed support. The bed support is mounted on the mounting device for movement between a loading position and a storage position. The apparatus further comprises drive means mounted on the mounting device and adapted to move the bed support between the loading position and the storage position. The mounting device is located on only one side of the bed support.

### SUMMARY

In brief, this disclosure describes a three-level vehicle lift with a simplified design that reduces materials, weight, complexity, and expense required for manufacturing, shipping, installation, and operation.

The lift includes four vertical support posts that are arranged at each corner of the assembly, an upper platform, a lower platform, and an actuation system. Each of the posts includes a pair of side-by-side tracks in which one track is dedicated to the upper platform and the other track to the lower platform. The upper and lower platforms are each provided with a carriage configured to engage a respective track in each leg and to travel vertically within the respective tracks as the platforms are moved vertically.

The actuation system preferably comprises a hydraulic system and is configured to move the upper and lower platforms independently. In one embodiment, the hydraulic system includes a single pump and dedicated upper-platform and lower-platform hydraulic circuits. A valve system is provided between the pump and the upper- and lower-platform hydraulic circuits. The valve system is selectively actuated to select the upper- or the lower-platform hydraulic circuit for operation. A variety of sensors and switches may be provided to prevent accidental movement and contact between the upper and lower platforms and vehicles located thereon.

### DESCRIPTION OF THE DRAWINGS

Illustrative embodiments are described in detail below with reference to the attached drawing figures, and wherein:
FIG. 1 is a perspective view of a three-level vehicle lift depicted in accordance with an exemplary embodiment;
FIG. 2 is a side elevational view of the three-level vehicle lift of FIG. 1;
FIG. 3 is a top plan view of the three-level vehicle lift of FIG. 1;
FIG. 4 is a bottom plan view of the three-level vehicle lift of FIG. 1 with one base plate removed from a leg of the lift assembly depicted in accordance with an exemplary embodiment;
FIG. 4a is an enlarged view of a leg of the lift assembly as indicated in FIG. 4 at 4a;
FIG. 5 is a front or entry-end elevational view of the three-level vehicle lift of FIG. 1;
FIG. 6 is a rear end elevational view of the three-level vehicle lift of FIG. 1;
FIG. 7 is a perspective view of a leg of the three-level vehicle lift of FIG. 1 with two carriages installed in accordance with an exemplary embodiment;
FIG. 8 is a partially exploded, perspective first side view of a carriage with a side plate removed to reveal internal components thereof depicted in accordance with an exemplary embodiment; and
FIG. 9 is a partially exploded, perspective second side view of the carriage of FIG. 8 with an opposite side plate removed to reveal internal components thereof depicted in accordance with an exemplary embodiment.

### DETAILED DESCRIPTION

The terms "about" or "approximately" or "substantially" as used herein denote deviations from the exact value by +/-10%, preferably by +/-5% and/or deviations in the form of changes that are insignificant to the function.

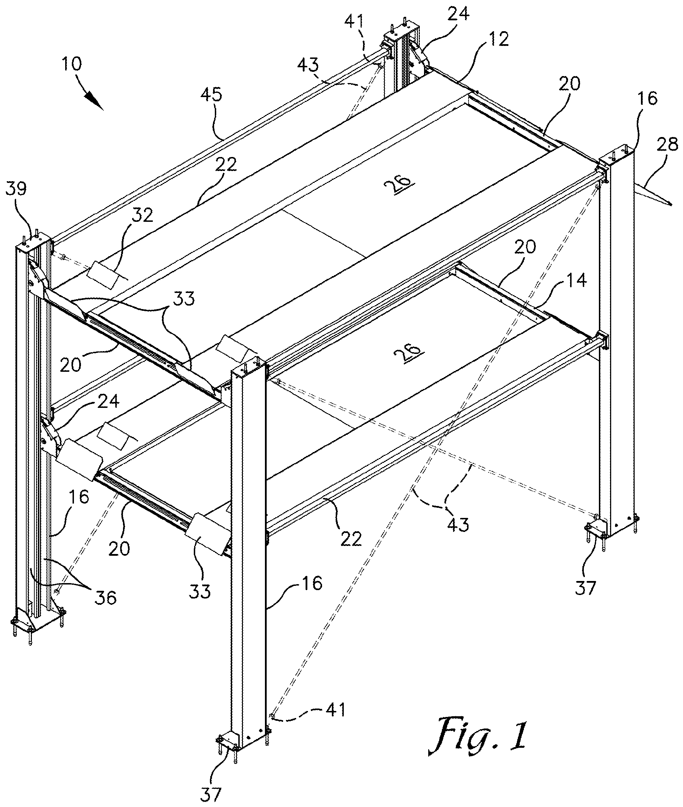

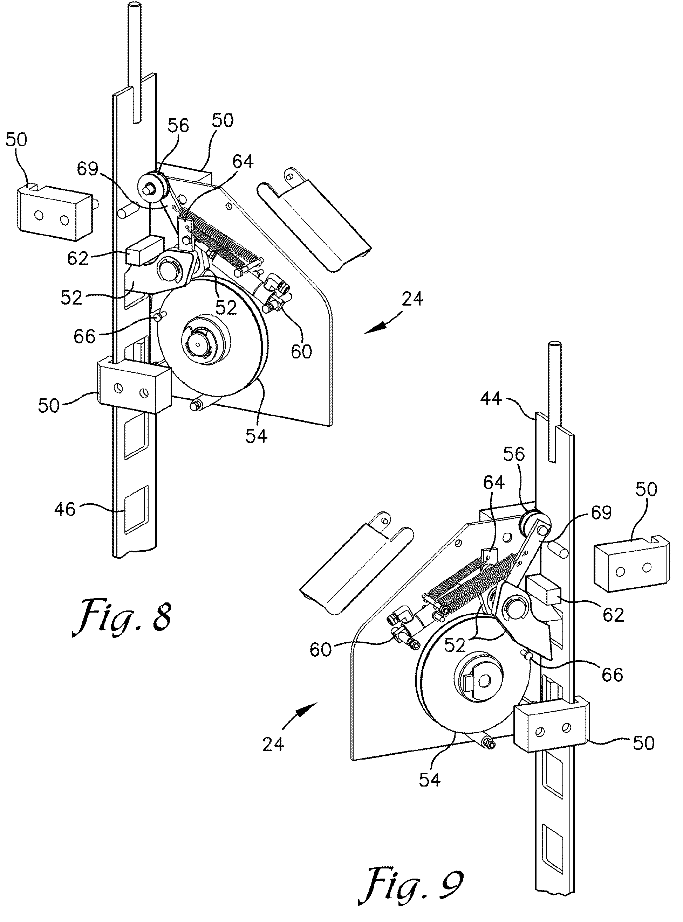

With reference to FIGS. 1-9, a three-level vehicle lift 10 is described in accordance with an exemplary embodiment. The lift 10 is described herein as a three-level vehicle lift, but such is not intended to limit the lift 10 to a particular number of levels. It is understood that the lift 10 can be configured to provide a greater number of levels without departing from the scope of embodiments described herein. The lift 10 is also described as a vehicle lift for use with automobiles like cars and light trucks, however the lift 10 can be used and/or configured for use with other vehicles, apparatus, and objects that may be disposed on the lift 10, such as motorcycles, farm equipment, or the like.

The lift 10 includes an upper platform 12, a lower platform 14, four legs 16, and an actuation system 18. The upper and lower platforms 12, 14 are configured with substantially the same construction which provides a generally rectangular, planar platform with a pair of transverse crossmembers 20 extending across a width of the platform and a pair of longitudinal support beams 22 extending along the length thereof. The transverse crossmembers 20 are disposed at opposite longitudinal ends of the respective platform 12, 14 and include a carriage 24 disposed at each end thereof. Each carriage 24 is configured to engage and travel vertically along a leg 16 as described below.

The longitudinal support beams 22 (also referred to as longitudinal support tracks 22) extend between the transverse crossmembers 20 and are spaced apart a distance to accommodate a transverse wheel spacing of a vehicle to be disposed on the respective platform 12, 14. One or more central plates 26 may be disposed between the support beams 22 to at least partially fill the space therebetween and provide a generally continuous surface to the respective platform 12, 14. The generally continuous surface of the respective platform 12, 14, increases safety for users of the lift 10 and prevents objects and/or fluids from falling from the overlying platforms 12, 14 onto a vehicle and/or person positioned therebelow. In another embodiment, the central plates 26 are configured to be load bearing or the support beams 22 are configured to provide a continuous surface to the platform 12, 14 or additional support beams are included to provide additional load-bearing area to the platform 12, 14 such that vehicles or objects of varied dimensions can be supported thereon, e.g. motorcycles, all-terrain vehicles, lawn equipment, or the like.

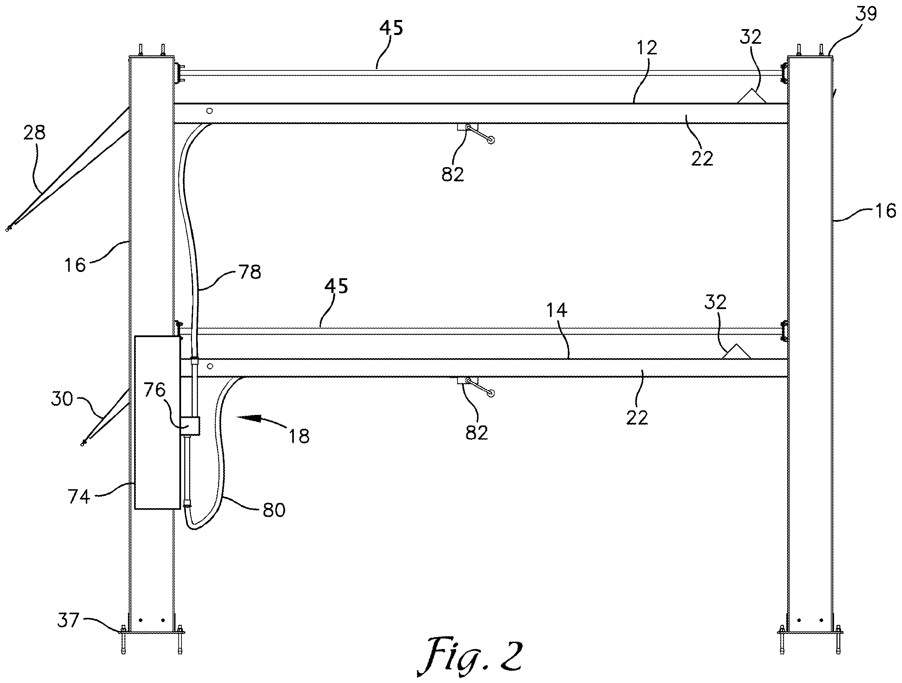

Upper- and lower-level entry ramps 28, 30 are hingedly coupled to front- or entry-ends of the support beams 22 and vehicle stops 32, 33 may be provided at or adjacent to opposite or rear ends of the support beams 22. As referred to herein, the front- or entry-end of the lift 10 is considered to be the end of the lift 10 through which vehicles are driven onto or off of the platforms 12, 14 and the end on which the ramps 28 and 30 are located (the left-hand side of the lift 10 as depicted in FIG. 2); the opposite end of the platforms 12, 14 is referred to as the rear end. The upper- and lower-level entry ramps 28, 30 are configured to ease travel of a vehicle onto the respective platform 12, 14 when the respective platform 12, 14 is in a fully lowered position. The ramps 28, 30 may have a length sufficient to provide a desired maximum entry angle or grade such that low-profile vehicles with low ground clearance can travel onto the platform 12, 14 without components of the vehicle other than the tires contacting the ramps 28, 30 and the platforms 12, 14. The upper-level entry ramp 28 may thus have a longer length than the lower-level entry ramp 30 because the fully lowered position of the upper platform 12 is higher than and on top of the lower platform 14.

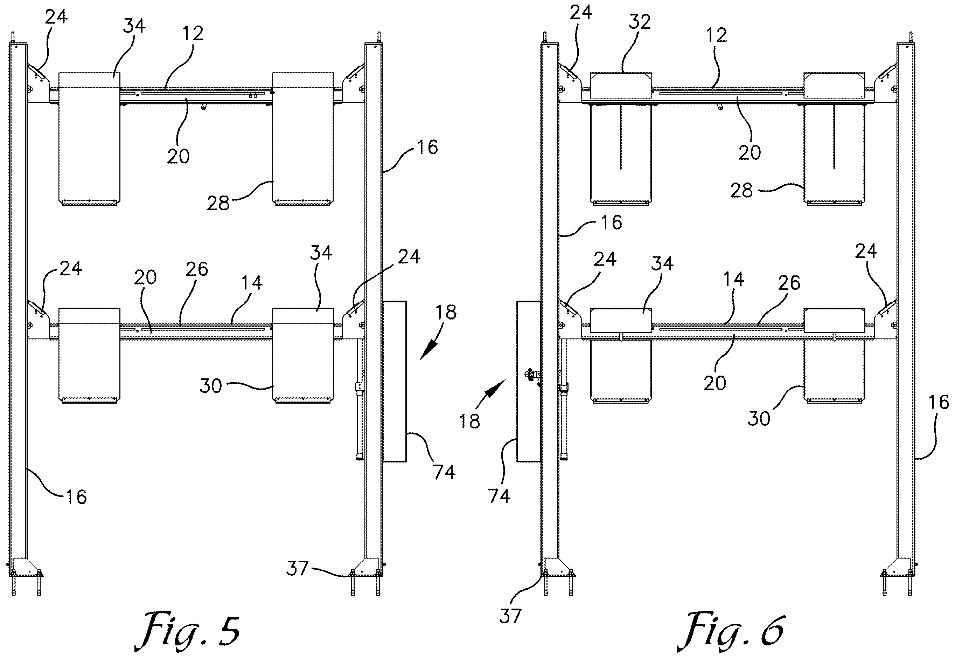

The upper- and lower-level entry ramps 28, 30 may include a flange 34 that extends over the respective platform 12, 14 and beyond a hinged connection point between the ramp 28, 30 and the platform 12, 14. The hinged coupling of the entry ramps 28, 30 allows the ramps 28, 30 to pivot at least partially downward as the respective platform 12, 14 is raised. As such, downward pivoting of the entry ramp 28, 30 pivots the flange 34 upward and away from the respective platform 12, 14. In the upwardly pivoted position as best seen in FIGS. 5 and 6, the flange 34 forms a vehicle safety stop that obstructs rearward travel of the vehicle off of the entry-end of the platform 12, 14 when in a raised position.

The vehicle stops 32, 33 similarly function to obstruct forward travel of a vehicle off of the rear end of the platform 12, 14 and to aid properly positioning the vehicle longitudinally along the platform 12, 14. As depicted in FIG. 2, the vehicle stops 32 may comprise a raised member extending transversely across the support beams 22, but any raised feature or depression configured to engage or obstruct further forward travel of the vehicle along the support beams 22 may employed. In one embodiment, the vehicle stops 32 are adjustably positionable on the support beams 22 so that the stops 32 may be repositioned longitudinally along the support beams 22 to accommodate vehicles of varied wheelbase dimensions. In another embodiment, the stops 32 comprise simple wheel chocks that are placed on the support beams 22 after a vehicle has been parked thereon to resist rolling of the vehicle. As depicted in FIGS. 1 and 6, the stops may be configured as end stops 33 that comprise a vertically extending flange extending from rear ends of the support beams 22 which resist travel of the vehicle wheels off the rear end of the support beams 22.

The legs or leg assemblies 16 each have substantially the same configuration. As such only a single leg 16 is described in detail here. Each leg 16 includes a pair of parallel, vertically extending channels 36 that are aligned and abutted side-by-side. Each leg 16 is further provided with a base plate 37 and a cap plate 39 disposed at opposing ends thereof and may include support rod mounts 41 coupled to an outer surface, among other features for supporting and anchoring the lift 10 in position. In one embodiment, a support rod 43 or cable may be connected between the support rod mounts 41 on adjacent legs 16 on either side of the lift 10 so that the support rod 43 extends between the bottom of one leg 16 and the top of the longitudinally adjacent leg 16 as depicted in phantom lines in FIG. 1. As depicted in FIGS. 1 and 2, in another embodiment, one or more support rods or other support members 45 may extend horizontally between adjacent pairs of the legs 16, among other configurations to provide structural stability to the lift 10.

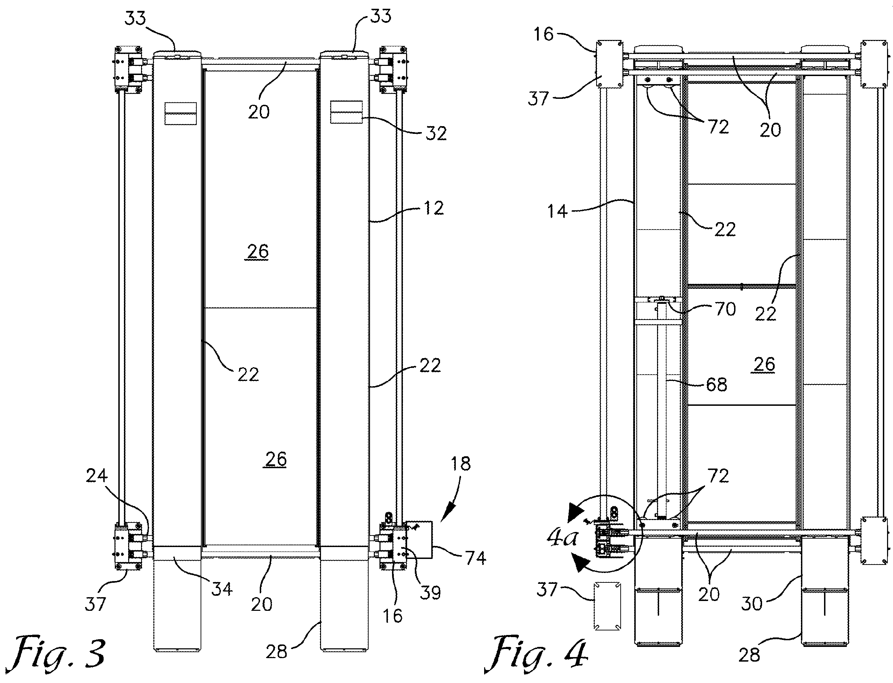

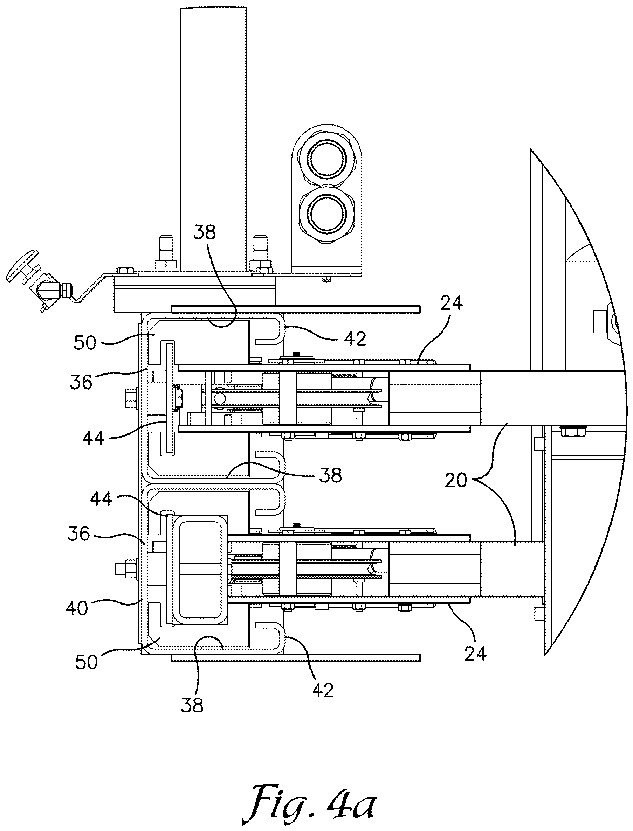

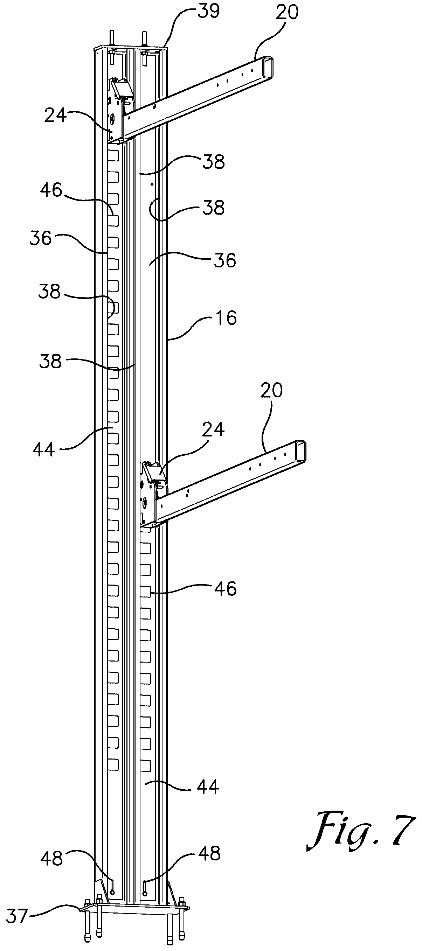

As best seen in FIGS. 4, 4a, and 7, the channels 36 may be formed by joining two C-channel members side-by-side, such as by welding, or by installing a central rib within a larger C-channel member to provide a E-shaped configuration, among other configurations. The channels 36 each include a pair of side walls 38 with a back wall 40 extending between outer edges thereof. Inner edges of the side walls 38 curl inward toward one another a distance and then toward the back wall 40 to form short hooked flanges 42, however other configurations may be employed without departing from the scope described herein.

As shown in FIG. 7, a stop-plate 44 is installed in each channel 36 along and spaced apart from the back wall 40. The stop-plate 44 extends substantially the vertical length of the respective channel 36 and includes a plurality of locking apertures 46 aligned and spaced along at least a portion of the length of the stop-plate 44. The stop-plate 44 is preferably affixed in the channel 36 spaced apart from the back wall 40 and in a manner that enables at least partial adjustment of the vertical position thereof. For example, as depicted in FIG. 7, the stop-plate 44 includes a slotted aperture 48 through which a fastener may be installed, but the stop-plate 44 may be joined or coupled to the channel 36 in any manner. In one embodiment, the stop-plate 44 may be omitted and the locking apertures 46 formed in the back wall 40 of the channel 36.

The channels 36 are configured to receive the carriages 24 disposed at ends of the transverse crossmembers 20 as depicted in FIGS. 7-9. The carriages 24 are configured to travel vertically within the channels 36 as the respective platforms 12, 14 are moved vertically. The carriages 24 are configured to accommodate the actuation system 18 which employs a number of cables to move the platforms 12, 14 as described more fully below, however the carriages 24 may be configured to accommodate other actuation systems 18.

As depicted in FIG. 1, the carriages 24 of the upper platform 12 all engage the outermost channels 36 on each of the legs 16 (i.e. the forwardmost channels 36 of the legs 16 on the entry end of the lift 10 and the rearwardmost channels 36 of the legs 16 on the rear end of the lift 10) while the carriages 24 of the lower platform 14 all engage the inner channels 36 of each leg 16, however other configurations may be employed. For example, in another embodiment the carriages 24 of the upper platform 12 all engage the forwardmost channels 36 of the legs 16 while the carriages 24 of the lower platform 14 all engage the rearwardmost channels 36 of the legs. Such a configuration may be beneficial because it enables the upper and lower platforms 12, 14 to be identically and interchangeably constructed thus reducing a number of different parts or components needed for the lift 10.

The carriages 24 include guides 50 that are entrapped between the hooked flanges 42 and the back wall 40 of the channel 36 and that slideably engage the stop-plate 44 to guide travel of the carriages vertically along the stop-plate 44 within the channels 36. The carriages 24 also include latching members 52, a travel pulley 54, a guide pulley 56, and a locking actuator 60.

The latching members 52 are biased to pivot toward the stop-plate 44 and to engage the locking apertures 46. A pair of latching members 52 is provided and each member of the pair is configured to alternate between engaged and disengaged alignment with the locking apertures 46 such that one latching member 52 of the pair is always engaged with a locking aperture 46. A catch block 62 extends across and above the latching members 52 to define an upper limit to the pivoting of the latching members 52. As such, unintended downward movement of the carriage 24 and thus the associated platform 12, 14, such as upon a failure within the lift 10 components, is restricted or arrested by inter-engagement of the latching member 52 with the locking aperture 46 and the catch block 62.

The locking actuator 60 includes a biased pivoting member 64 at a distal end of a piston of the actuator 60. When actuated, the member 64 engages a surface of one of the latching members 52 to resist pivoting of the latching member 52 away from engagement with the locking apertures 46 and thus locks the carriage 24 and the associated platform 12, 14 in a vertical position. The locking actuator 60 is preferably a pneumatic actuator but may employ any actuation means.

The travel pulley 54 receives a cable (not shown) of the actuation system 18 from a transverse direction along the platform 12, 14 and redirects the cable vertically upward toward the cap plate 39 disposed on a top end of the respective leg 16 and providing an attachment point for the cable. The travel pulley 54 includes a pair of pins 66 extending from opposing axial surfaces thereof and configured to engage the latching members 52 in a cam-like fashion during downward travel of the platform 12, 14. Such camming action pivots the latching members 52 away from the locking apertures 46 and thus allows downward travel of the carriage 24.

The guide pulley 56 is provided on a distal end of a biased, pivoting arm 69. The pivoting arm 69 extends from an upper edge of one of the latching members 52 is pivotable with the latching member 52. The guide pulley 56 engages and is biased against the cable (not shown) and may guide the cable toward the cap plate 39. The bias on the guide pulley 56 operates to pivot the associated latching member 52 toward engagement with the locking apertures 46 upon breakage or the occurrence of slack in the cable and thus operates as a safety catch mechanism.

With reference now to FIG. 2, the actuation system 18 includes a hydraulic system that is operated to manipulate a series of cables (not shown) that work to raise and lower the platforms 12, 14. Although a hydraulic system is described herein other systems, such as pneumatic or electronic systems may be employed. The actuation system 18 includes a hydraulic actuator 68 disposed on an underside of one of the longitudinal support beams 22 of each of the platforms 12, 14, as shown in FIG. 4. The piston of the actuator 68 is coupled to a carrier 70 that couples to four lifting cables (not shown). Cable pulleys 72 are provided on the carrier 70 and near each end of the support beam 22 to direct the lifting cables from the carrier 70 to respective legs 16 (the cable pulleys 72 on the carrier 70 are obstructed from view and are not shown). The lifting cables are threaded through the respective carriages 24 and distal ends thereof are coupled to the respective cap plates 39 on the associated legs 16. As such, actuation of the actuator 68 draws the lifting cables in to raise the respective platform 12, 14 or feeds the lifting cables out to lower the platform 12, 14 or vice versa. In one embodiment, the hydraulic actuator 68 and lifting cable configuration may be similar to that of an HD-9 four-post lift from BendPak, Inc. of Santa Paula, California. In some embodiments, removeable covers or plates may be provided on a bottom surface of the support beams 22 to enclose the hydraulic actuator 68 therein to increase safety and/or aesthetics of the lift 10 and to prevent fluids escaping from the hydraulic system from dripping onto objects below.

Referring to FIGS. 2 and 3, the actuation system 18 includes a single hydraulic pump 74, the output of which is coupled to a regulator or valve 76 which is further connected to an upper-platform hydraulic circuit 78 and a lower-platform hydraulic circuit 80, and as depicted in FIG. 2. The valve 76 is operable to selectively regulate hydraulic fluid flow or power to either the upper circuit 78 or the lower circuit 80. The valve 76 may comprise a manually operable ball-valve or similar valve means or may comprise an electronically controlled solenoid valve, among other configurations.

The actuation system 18 may also include a pneumatic pump (not shown), valve, and upper- and lower-platform pneumatic circuits configured to provide pneumatic power or pressurized air to the locking actuators 60 for operation thereof in a manner similar to that of the hydraulic circuits 78, 80

The actuation system 18 may further comprise a number of sensors, switches, or the like, such as proximity sensors, limit switches, infrared detectors, cameras, light curtains, or the like configured to detect characteristics like the presence of objects on the platforms 12, 14 and beneath the lower platform 14, the location or height of such objects, and the vertical position of the platforms 12, 14 relative to one another, among other characteristics. The sensors can be disposed on the legs 16, surfaces of the platforms 12, 14, or other surfaces of the lift 10 or surrounding environment. For example, as depicted in FIG. 2, a sensor 82 is coupled to the underside of one or both platforms 12, 14. The sensor 82 includes a pivoting lever or bar that hangs downward from an underside of the respective platform 12, 14 and is configured to pivot upward when coming into contact with a vehicle or other object parked beneath the respective platform 12, 14 and/or when contacting the underlying platform 14 or the ground. Upward pivoting of the lever causes the sensor 82 to provide a signal which can be employed to cease operation and/or movement of the respective platform 12, 14 to avoid collisions between the platforms 12, 14 and the vehicles or objects parked thereon. The sensor 82 may be positioned and/or adjustably positionable to align with a roof or high point of the underlying vehicle and the lever may be padded or otherwise coated to avoid damaging the underlying vehicle when coming into contact therewith. Although only a single sensor 82 is shown coupled to the platform 12, any number of sensors 82 and other sensors of the same or different configuration may be employed. A control system may be provided for control and operation of the actuation system 18 in accordance with inputs provided by the sensors and with proper sequencing of the locking actuators 60 and the hydraulic actuators 68.

With continued reference to FIGS. 1-9, operation of the three-level vehicle lift 10 is described in accordance with an exemplary embodiment. With the upper and lower platforms 12, 14 in their lowered positions, a first vehicle is driven up the upper-level entry ramps 28 onto the support beams 22 of the upper platform 12. The vehicle may be driven along the support beams 22 until contact is made between the tires thereof and the vehicle stops 32 (or end stops 33). The vehicle is then shut down and placed in a secured, parked configuration, e.g. placed in park and an emergency brake applied.

The actuation system 18 is energized and the valve 76 actuated to direct hydraulic fluid to the upper-platform hydraulic circuit 78. Pneumatic power may also be provided to the locking actuators 60 in each carriage 24 of the upper platform 12 to enable pivoting of the associated latching members 52. Actuation of the hydraulic actuator 68 in the upper platform 12 draws in the lifting cables which in turn raises the upper platform 12. As the upper platform 12 moves upward, the respective carriages 24 travel vertically along their respective channels 36 and the latching members 52 alternately engage the locking apertures 46. Upon reaching a desired height, actuation of the actuator 68 is halted and the locking actuators 60 are activated to lock the upper platform 12 in position. In some embodiments, the upper platform 12 may be allowed to lower slightly to ensure full engagement of the latching members 52 with the appropriate locking apertures 46. Such may be accomplished by allowing bleed back in the hydraulic circuit 78. The desired height of the first platform 12 is preferably at the maximum extent of available travel of the upper platform 12 but lower positions may be employed.

A second vehicle can next be disposed on the lower platform 14 and raised in a manner similar to that of the first vehicle and the upper platform 12 as described above. However, the valve 76 must first be actuated to open the pump 74 output to the lower-platform hydraulic circuit 80. A valve associated with the pneumatic system may also be actuated. A control system for the lift 10 and associated with the actuation system 18 may detect a number of signals from sensors on the lift 10 prior to and during lifting of the upper and lower platforms 12, 14 to ensure safe operation and to avoid contact between the platforms 12, 14 and vehicles or objects disposed thereon.

Following lifting of the lower platform 14 to a desired height and securing the platform 14 in place via the latching members 52 and the locking actuator 60, a third vehicle may be disposed beneath the lower platform 14.

The three-level vehicle lift 10 provides many benefits over lifts available in the art. The simplicity, reduced complexity, and reduced number of components reduces the costs and materials required for manufacture thereof. Costs for shipping and installation of the lift 10 are thus also reduced. Additionally, the above described configuration has increased operating capacity over known designs and offers increased functionality and ease of use over known designs. The lift 10 can also be easily expanded to larger applications without a great deal of redesign. For example, a fourth or subsequent levels might be simply added by incorporating an additional channel 36 to each leg for each additional level, adding additional platforms that travel within the additional channels 36, and adding an additional hydraulic circuits to the actuation system 18. Prior designs are not so easily altered or expanded.

Many different arrangements of the various components depicted, as well as components not shown, are possible without departing from the scope of protection as defined by the appended claims.

## Claims

1. A multi-level vehicle lift (10) comprising:
a plurality of vehicle platforms (12, 14) positioned in a vertically stacked arrangement to overlie one another, each vehicle platform (12, 14) configured to receive and support a vehicle thereon;
**characterized in that** the lift (10) comprises four leg assemblies (16) each including a number of vertically extending channels (36) arranged side-by-side together, the number of channels (36) in each leg assembly (16) being equal to a total number of vehicle platforms (12, 14) in the plurality of vehicle platforms (12, 14) and each channel of each leg assembly in engagement with a respective one of the plurality of vehicle platforms;
and a plurality of carriages (24), each carriage (24) engaging a respective one of the channels (36) and coupled to a respective vehicle platform (12, 14), the carriages (24) being configured to move vertically along the respective channel (36) to move the respective platform vertically, wherein the platforms (12, 14) are each provided with a carriage (24) configured to engage a respective channel (36) in each leg assembly (16).

2. The multi-level vehicle lift (10) of claim 1, wherein each of the channels (36) is C-shaped to provide a pair of side walls (38) and a back wall (40), and distal edges of the side walls (38) include flanges extending at least partially toward one another.

3. The multi-level vehicle lift (10) of claim 2, wherein the side walls (38) of adjacent ones of the channels (36) abut.

4. The multi-level vehicle lift (10) of claim 2, wherein the channels (36) of each leg assembly (16) are arranged side-by-side with the back walls (40) thereof aligned in a plane that extends parallel to a longitudinal dimension of the lift (10) and parallel to a direction of travel of a vehicle onto the lift.

5. The multi-level vehicle lift (10) of claim 1, wherein the plurality of vehicle platforms (12, 14) comprises two vehicle platforms (12, 14) and the number of channels (36) in each leg assembly (16) comprises two channels (36), and wherein the carriages (24) associated with a first of the vehicle platforms (12, 14) are disposed in a first channel (36) in each of the leg assemblies (16) and the carriages (24) associated with a second of the vehicle platforms (12, 14) are disposed in a second channel (36) in each of the leg assemblies (16).

6. The multi-level vehicle lift (10) of claim 5, wherein a first vehicle is disposed on the first of the vehicle platforms (12, 14), a second vehicle is disposed on the second of the vehicle platforms (12, 14), the first vehicle and the first of the vehicle platforms (12, 14) is positioned vertically above and overlying the second vehicle and the second of the vehicle platforms (12, 14), and a third vehicle is positioned beneath the second of the vehicle platforms (12, 14).

7. The multi-level vehicle lift (10) of claim 1, further comprising:
a power system configured to power movement of each of the vehicle platforms (12, 14) vertically along the leg assemblies (16);
a plurality of circuits (78, 80), each circuit (78, 80) being associated with a respective one of the plurality of vehicle platforms (12, 14) and in communication with the power system; and
a regulator in the power system and in communication with each of the plurality of circuits (78, 80), the regulator being actuated to selectively supply power to each of the plurality of circuits (78, 80).

8. The multi-level vehicle lift (10) of claim 7, wherein the power system comprises a hydraulic system, the plurality of circuits (78, 80) comprise hydraulic circuits (78, 80), and the regulator comprises a valve (76).

9. The multi-level vehicle lift (10) of claim 1, further comprising:
a sensor disposed on an underside surface of one or more of the vehicle platforms (12, 14), the sensor configured to detect presence of an object in close proximity to the underside surface.

10. The multi-level vehicle lift (10) of claim 1 wherein:
the plurality of vehicle platforms (12, 14) comprises an upper-vehicle platform (12) and a lower-vehicle platform (14), wherein
the lower-vehicle platform (14) is positioned vertically beneath the upper-vehicle platform (12),
wherein the vertically extending channels (36) of the leg assemblies (16) each includes a first and a second vertically extending channel, the first and second channels (36) of each leg assembly (16) having a C-shaped cross-sectional shape that provides a pair of side walls (38) and a back wall (40) and being arranged side-by-side with adjacent side walls (38) thereof abutting, the first channel (36) of each leg assembly (16) being associated with the upper-vehicle platform (12) and the second channel (36) of each leg assembly (16) being associated with the lower-vehicle platform (14), and
wherein each of the plurality of carriages (24), engages a respective one of the first or second channels (36) and is coupled to the respective upper- (12) or lower-vehicle platform (14) associated with the respective one of the first or second channels (36), the carriages (24) being configured to move vertically along the respective first or second channel (36) to enable movement of the respective upper-vehicle platform (12) or lower-vehicle platform (14) vertically.

11. The multi-level vehicle lift (10) of claim 10, further comprising:
a power system configured to power movement of each of the upper- (12) and lower-vehicle (14) platforms vertically along the leg assemblies (16);
an upper-platform circuit (78) being associated with the upper-vehicle platform (12) and in communication with the power system;
a lower-platform circuit (80) associated with the lower-vehicle platform (14) and in communication with the power system; and
a regulator in the power system and in communication with each of the upper-(78) and lower-platform circuits (80), the regulator being actuated to selectively supply power to each of the upper- (78) and lower-platform circuits (80).

12. The multi-level vehicle lift (10) of claim 11, wherein the power system comprises a hydraulic system, the upper- (78) and lower-platform circuits (80) comprise hydraulic circuits (78, 80), and the regulator comprises a valve (76).

13. The multi-level vehicle lift (10) of claim 10, further comprising:
a sensor disposed on an underside surface of one or both of the upper-vehicle platform (12) and the lower-vehicle platform (14), the sensor configured to detect presence of an object in close proximity to the underside surface.

## Patentansprüche

1. Fahrzeughebevorrichtung (10) mit mehreren Ebenen, umfassend:
eine Mehrzahl von Fahrzeugplattformen (12, 14), die in einer vertikal gestapelten Anordnung so positioniert sind, dass sie übereinanderliegen, wobei jede Fahrzeugplattform (12, 14) so ausgebildet ist, dass sie ein Fahrzeug aufnehmen und tragen kann;
**dadurch gekennzeichnet, dass** die Vorrichtung (10) vier Beinbaugruppen (16) umfasst, die jeweils eine Anzahl vertikal verlaufender Kanäle (36) umfassen, die nebeneinander angeordnet sind, wobei die Anzahl der Kanäle (36) in jeder Beinbaugruppe (16) der Gesamtzahl der Fahrzeugplattformen (12, 14) in der Mehrzahl von Fahrzeugplattformen (12, 14) entspricht und wobei jeder Kanal jeder Beinbaugruppe mit einer jeweiligen Fahrzeugplattform der Mehrzahl von Fahrzeugplattformen in Eingriff steht;
sowie eine Mehrzahl von Laufwagen (24), wobei jeder Laufwagen (24) in einen jeweiligen der Kanäle (36) eingreift und mit einer jeweiligen Fahrzeugplattform (12, 14) gekoppelt ist, wobei die Laufwagen (24) so ausgebildet sind, dass sie sich vertikal entlang des jeweiligen Kanals (36) bewegen, um die jeweilige Plattform vertikal zu verschieben, wobei die Plattformen (12, 14) jeweils mit einem Laufwagen (24) versehen sind, der so ausgebildet ist, dass er in einen jeweiligen Kanal (36) in jeder Beinbaugruppe (16) eingreift.

2. Fahrzeughebevorrichtung (10) mit mehreren Ebenen nach Anspruch 1, wobei jeder der Kanäle (36) C-förmig ausgebildet ist, um ein Paar Seitenwände (38) und eine Rückwand (40) zu bilden, und die distalen Kanten der Seitenwände (38) Flansche aufweisen, die sich zumindest teilweise aufeinander zu erstrecken.

3. Fahrzeughebevorrichtung (10) mit mehreren Ebenen nach Anspruch 2, wobei die Seitenwände (38) benachbarter Kanäle (36) aneinander anliegen.

4. Fahrzeughebevorrichtung (10) mit mehreren Ebenen nach Anspruch 2, wobei die Kanäle (36) jeder Beinbaugruppe (16) nebeneinander angeordnet sind, wobei deren Rückwände (40) in einer Ebene ausgerichtet sind, die sich parallel zu einer Längsausdehnung der Hebevorrichtung (10) und parallel zu einer Fahrtrichtung eines Fahrzeugs auf die Hebevorrichtung erstreckt.

5. Fahrzeughebevorrichtung (10) mit mehreren Ebenen nach Anspruch 1, wobei die Mehrzahl von Fahrzeugplattformen (12, 14) zwei Fahrzeugplattformen (12, 14) umfasst und die Anzahl der Kanäle (36) in jeder Beinbaugruppe (16) zwei Kanäle (36) umfasst, und wobei die einer ersten der Fahrzeugplattformen (12, 14) zugeordneten Laufwagen (24) in einem ersten Kanal (36) in jeder der Beinbaugruppen (16) angeordnet sind und die einer zweiten der Fahrzeugplattformen (12, 14) zugeordneten Laufwagen (24) in einem zweiten Kanal (36) in jeder der Beinbaugruppen (16) angeordnet sind.

6. Fahrzeughebevorrichtung (10) mit mehreren Ebenen nach Anspruch 5, wobei ein erstes Fahrzeug auf der ersten der Fahrzeugplattformen (12, 14) angeordnet ist, ein zweites Fahrzeug auf der zweiten der Fahrzeugplattformen (12, 14) angeordnet ist, das erste Fahrzeug und die erste der Fahrzeugplattformen (12, 14) vertikal über dem zweiten Fahrzeug und der zweiten der Fahrzeugplattformen (12, 14) positioniert sind und ein drittes Fahrzeug unterhalb der zweiten der Fahrzeugplattformen (12, 14) positioniert ist.

7. Fahrzeughebevorrichtung (10) mit mehreren Ebenen nach Anspruch 1, ferner umfassend:
ein Antriebssystem, das so ausgelegt ist, dass es die vertikale Bewegung jeder der Fahrzeugplattformen (12, 14) entlang der Beinbaugruppen (16) antreibt;
eine Mehrzahl von Kreisläufen (78, 80), wobei jeder Kreislauf (78, 80) einer jeweiligen der Mehrzahl von Fahrzeugplattformen (12, 14) zugeordnet ist und mit dem Antriebssystem in Verbindung steht; und
einen Regler im Antriebssystem, der mit jedem der Mehrzahl von Kreisläufen (78, 80) in Verbindung steht, wobei der Regler so betätigt wird, dass er jeden der Mehrzahl von Kreisläufen (78, 80) selektiv mit Strom versorgt.

8. Fahrzeughebevorrichtung (10) mit mehreren Ebenen nach Anspruch 7, wobei das Antriebssystem ein Hydrauliksystem umfasst, wobei die Mehrzahl von Kreisläufen (78, 80) Hydraulikkreisläufe (78, 80) umfassen, und der Regler ein Ventil (76) umfasst.

9. Fahrzeughebevorrichtung (10) mit mehreren Ebenen nach Anspruch 1, ferner umfassend:
einen Sensor, der an einer Unterseite einer oder mehrerer der Fahrzeugplattformen (12, 14) angeordnet ist, wobei der Sensor so konfiguriert ist, dass er das Vorhandensein eines Objekts in unmittelbarer Nähe der Unterseite erfasst.

10. Fahrzeughebevorrichtung (10) mit mehreren Ebenen nach Anspruch 1, wobei:
die Mehrzahl von Fahrzeugplattformen (12, 14) eine obere Fahrzeugplattform (12) und eine untere Fahrzeugplattform (14) umfassen, wobei
die untere Fahrzeugplattform (14) vertikal unterhalb der oberen Fahrzeugplattform (12) angeordnet ist,
wobei die vertikal verlaufenden Kanäle (36) der Beinbaugruppen (16) jeweils einen ersten und einen zweiten vertikal verlaufenden Kanal umfassen, wobei der erste und der zweite Kanal (36) jeder Beinbaugruppe (16) einen C-förmigen Querschnitt aufweist, der ein Paar Seitenwände (38) und eine Rückwand (40) bildet, wobei die Seitenwände (38) nebeneinander angeordnet sind und aneinander anliegen, wobei der erste Kanal (36) jeder Beinbaugruppe (16) der oberen Fahrzeugplattform (12) zugeordnet ist und der zweite Kanal (36) jeder Beinbaugruppe (16) der unteren Fahrzeugplattform (14) zugeordnet ist, und
wobei jeder der Mehrzahl von Laufwagen (24) in einen jeweiligen der ersten oder zweiten Kanäle (36) eingreift und mit der jeweiligen oberen (12) oder unteren Fahrzeugplattform (14) gekoppelt ist, die dem jeweiligen der ersten oder zweiten Kanäle (36) zugeordnet ist, wobei die Laufwagen (24) so ausgebildet sind, dass sie sich vertikal entlang des jeweiligen ersten Kanals (36) oder des zweiten Kanals (36) bewegen, um eine vertikale Bewegung der jeweiligen oberen Fahrzeugplattform (12) oder unteren Fahrzeugplattform (14) zu ermöglichen.

11. Fahrzeughebevorrichtung (10) mit mehreren Ebenen nach Anspruch 10, ferner umfassend:
ein Antriebssystem, das so ausgelegt ist, dass es die vertikale Bewegung sowohl der oberen (12) als auch der unteren Fahrzeugplattform (14) entlang der Beinbaugruppen (16) antreibt;
einen der oberen Fahrzeugplattform (12) zugeordneten und mit dem Antriebssystem in Verbindung stehenden Kreislauf (78) für die obere Plattform;
einen der unteren Fahrzeugplattform (14) zugeordneten und mit dem Antriebssystem in Verbindung stehenden Kreislauf (80) für die untere Plattform; und
einen Regler im Antriebssystem, der mit dem Kreislauf der oberen Plattform (78) und dem Kreislauf der unteren Plattform (80) in Verbindung steht, wobei der Regler so betätigt wird, dass er den Kreislauf der oberen Plattform (78) und den Kreislauf der unteren Plattform (80) selektiv mit Energie versorgt.

12. Fahrzeughebevorrichtung (10) mit mehreren Ebenen nach Anspruch 11, wobei das Antriebssystem ein Hydrauliksystem umfasst, die Kreisläufe der oberen (78) und der unteren Plattform (80) Hydraulikkreisläufe (78, 80) umfassen und der Regler ein Ventil (76) umfasst.

13. Fahrzeughebevorrichtung (10) mit mehreren Ebenen nach Anspruch 10, ferner umfassend:
einen Sensor, der an einer Unterseite der oberen Fahrzeugplattform (12) und/oder der unteren Fahrzeugplattform (14) angeordnet ist, wobei der Sensor so konfiguriert ist, dass er das Vorhandensein eines Objekts in unmittelbarer Nähe der Unterseite erfasst.

## Revendications

1. Élévateur de véhicules à plusieurs niveaux (10) comprenant:
une pluralité de plates-formes pour véhicules (12, 14) disposées selon un agencement empilé verticalement de manière à se superposer les unes aux autres, chaque plate-forme pour véhicules (12, 14) étant configurée pour recevoir et supporter un véhicule;
**caractérisé en ce que** l'élévateur comprend quatre ensembles de pieds (16) comprenant chacun un nombre de canaux (36) s'étendant verticalement disposés côte à côte, dans lequel le nombre de canaux (36) dans chaque ensemble de pieds (16) est égal au nombre total de plates-formes pour véhicules (12, 14) de la pluralité de plates-formes pour véhicules (12, 14), chaque canal de chaque ensemble de pieds étant en prise avec une plate-forme respective parmi la pluralité de plates-formes pour véhicules;
et une pluralité de chariots (24), chaque chariot (24) s'engageant dans l'un des canaux (36) respectifs et étant couplé à une plate-forme de véhicule (12, 14) respective, les chariots (24) étant configurés pour se déplacer verticalement le long du canal respectif (36) afin de déplacer verticalement la plate-forme respective, dans lequel les plates-formes (12, 14) sont chacune pourvues d'un chariot (24) configuré pour s'engager dans un canal respectif (36) de chaque ensemble de pied (16).

2. Élévateur de véhicules à plusieurs niveaux (10) selon la revendication 1, dans lequel chacun des canaux (36) est en forme de C pour fournir une paire de parois latérales (38) et une paroi arrière (40), et les bords distaux des parois latérales (38) comportent des rebords s'étendant au moins partiellement l'un vers l'autre.

3. Élévateur à plusieurs niveaux (10) selon la revendication 2, dans lequel les parois latérales (38) de canaux (36) adjacents sont en butée l'une contre l'autre.

4. Elévateur de véhicules à plusieurs niveaux (10) selon la revendication 2, dans lequel les canaux (36) de chaque ensemble de pieds (16) sont disposés côte à côte, avec leurs parois arrière (40) étant alignées dans un plan qui s'étend parallèlement à une dimension longitudinale de l'élévateur (10) et parallèlement à une direction de déplacement d'un véhicule sur l'élévateur.

5. Élévateur de véhicules à plusieurs niveaux (10) selon la revendication 1, dans lequel la pluralité de plates-formes pour véhicules (12, 14) comprend deux plates-formes pour véhicules (12, 14) et le nombre de canaux (36) dans chaque ensemble de pieds (16) comprend deux canaux (36), et dans lequel les chariots (24) associés à une première des plates-formes pour véhicules (12, 14) sont disposés dans un premier canal (36) de chacun des ensembles de pieds (16) et les chariots (24) associés à une deuxième des plates-formes pour véhicules (12, 14) sont disposés dans un deuxième canal (36) de chacun des ensembles de pieds (16).

6. Élévateur de véhicules à plusieurs niveaux (10) selon la revendication 5, dans lequel un premier véhicule est disposé sur la première des plates-formes de véhicules (12, 14), un deuxième véhicule est disposé sur la deuxième des plates-formes de véhicules (12, 14), le premier véhicule et la première des plates-formes pour véhicules (12, 14) sont positionnés verticalement au-dessus et superposés au deuxième véhicule et à la deuxième des plates-formes pour véhicules (12, 14), et un troisième véhicule est positionné sous la deuxième des plates-formes pour véhicules (12, 14).

7. Élévateur de véhicules à plusieurs niveaux (10) selon la revendication 1, comprenant en outre:
un système d'alimentation configuré pour entraîner le déplacement de chacune des plates-formes pour véhicules (12, 14) verticalement le long des ensembles de pieds (16);
une pluralité de circuits (78, 80), chaque circuit (78, 80) étant associé à l'une respective de la pluralité de plates-formes pour véhicules (12, 14) et en communication avec le système d'alimentation; et
un régulateur situé dans le système d'alimentation et en communication avec chacun des plusieurs circuits (78, 80), le régulateur étant actionné pour alimenter de manière sélective chacun des plusieurs circuits (78, 80).

8. Elévateur de véhicules à plusieurs niveaux (10) selon la revendication 7, dans lequel le système d'alimentation comprend un système hydraulique, la pluralité de circuits (78, 80) comprend des circuits hydrauliques (78, 80), et le régulateur comprend une vanne (76).

9. Élévateur de véhicules à plusieurs niveaux (10) selon la revendication 1, comprenant en outre:
un capteur disposé sur une surface inférieure d'une ou plusieurs des plates-formes pour véhicules (12, 14), dans lequel le capteur est configuré pour détecter la présence d'un objet à proximité immédiate de la surface inférieure.

10. Élévateur de véhicules à plusieurs niveaux (10) selon la revendication 1, dans lequel:
la pluralité de plates-formes pour véhicules (12, 14) comprend une plate-forme pour véhicule supérieure (12) et une plate-forme pour véhicule inférieure (14), dans lequel
la plate-forme pour véhicule inférieure (14) est positionnée verticalement sous la plate-forme pour véhicule supérieure (12),
dans lequel les canaux (36) des ensembles de pieds (16) s'étendant verticalement comprennent chacun un premier et un deuxième canaux s'étendant verticalement, les premier et deuxième canaux (36) de chaque ensemble de pieds (16) présentant une section transversale en forme de C qui fournit une paire de parois latérales (38) et une paroi arrière (40) et étant disposés côte à côte, dans lequel des parois latérales adjacentes (38) de ceux-ci sont en butée, le premier canal (36) de chaque ensemble de pied (16) étant associé à la plate-forme pour véhicule supérieure (12) et le deuxième canal (36) de chaque ensemble de pied (16) étant associé à la plate-forme pour véhicule inférieure (14), et
dans lequel chacun, parmi la pluralité de chariots (24), s'engage dans l'un respectif des premier ou deuxième canaux (36) et est couplé à la plate-forme pour véhicule supérieure (12) ou inférieure (14) associée à l'un respectif des premier ou deuxième canaux (36), les chariots (24) étant configurés pour se déplacer verticalement le long du premier ou du deuxième canal (36) respectif afin de permettre le déplacement vertical de la respective plate-forme pour véhicule supérieure (12) ou inférieure (14) .

11. Élévateur de véhicules à plusieurs niveaux (10) selon la revendication 10, comprenant en outre:
un système d'alimentation configuré pour alimenter le déplacement vertical de chacune des plates-formes pour véhicule supérieure (12) et inférieure (14) le long des ensembles de pieds (16);
un circuit de plate-forme supérieure (78) associé à la plate-forme pour véhicule supérieure (12) et en communication avec le système d'alimentation;
un circuit de plate-forme inférieure (80) associé à la plate-forme pour véhicule inférieure (14) et en communication avec le système d'alimentation; et
un régulateur situé dans le système d'alimentation et en communication avec chacun des circuits de plate-forme supérieure (78) et de plate-forme inférieure (80), le régulateur étant actionné pour fournir de manière sélective de l'énergie à chacun des circuits de plate-forme supérieure (78) et de plate-forme inférieure (80).

12. Élévateur de véhicules à plusieurs niveaux (10) selon la revendication 11, dans lequel le système d'alimentation comprend un système hydraulique, les circuits de la plate-forme supérieure (78) et de la plate-forme inférieure (80) comprennent des circuits hydrauliques (78, 80), et le régulateur comprend une vanne (76).

13. Élévateur de véhicules à plusieurs niveaux (10) selon la revendication 10, comprenant en outre:
un capteur disposé sur une surface inférieure de l'une ou des deux plates-formes de véhicule supérieure (12) et inférieure (14), le capteur étant configuré pour détecter la présence d'un objet à proximité immédiate de la surface inférieure.
